# EUROPEAN PATENT APPLICATION

(11) **EP 3 467 194 A1**
(43) Date of publication of application: **10.04.2019**
(21) Application number: 17734128.6
(22) Date of filing: 23.05.2017
(51) Int. Cl.: D06H 1/04, C08G 18/48, C08G 18/73, C08G 18/75, C08G 18/08, C08G 18/12, C08G 18/28, C08G 18/32

(54) **COMPOUND FOR PRODUCING A WATERMARK ON A LAMINAR TEXTILE MATERIAL AND CORRESPONDING COMPOSITION, TEXTILE MATERIAL, METHODS AND USES**

(30) Priority: 25.05.2016 ES 201630677
(71) Applicant: Identity Mark S.L., 08202 Sabadell (ES)
(72) Inventor: ROCAS SOROLLA, Josep, 08860 Castelldefels (ES); SOLÉ PORTA, Berta, 43717 La Bisbal del Penedès (ES); PUIGPINÓS COLILLAS, Albert, 08740 Sant Andreu de la Barca (ES)
(74) Representative: Curell Suñol S.L.P.
(86) International application number: PCT/ES2017/070340
(87) International publication number: WO 2017/203081

(57) **Abstract**

Compound for manufacturing a watermark in a laminar textile material and a composition, textile material, procedures and corresponding uses. Compound for manufacturing a watermark in a laminar textile material, having the formula

C-W-(A-W)ₘ-(X-W)ₙ-X-(W-A)ₚ-W-C'

where
W is a radical derived from TMDI, IPDI or HDI,
every X is a radical derived from PEG, PPG, dimer diol or dimethylolpropionic acid, irrespective of the other X, where W-(X-W)ₙ-X-W has a molecular weight between 750-15.000 g/mol and a NCO:OH ratio between 0.9 and 2.1,
A is a radical derived from an amine,
C and C' are each one, independently of the other, a radical derived from diethanolamine, CH₃-CH₂-CH₂-CH₂-NH-CH₂-CH₂-CH₂-Si(OCH₃)₃, glycine, taurine, homotaurine, 2-ethylhexanol, N-(2-aminoethyl)-3-aminopropyltrimethoxysilane, bis(trimethoxysilylpropyl)amine, polyethylene glycols, N,N-dimethylethanolamine, N,N,N'-trimethyl-N'-hydroxyethyl-bisaminoethyleter, N,N-bis(3-dimethylaminopropyl)-N-isopropanolamine, 2-(2-dimethylaminoethoxy)ethanol, N,N,N'-trimethylaminoethyl-ethanolamine, dimethylaminopropylamine, or a blocking agent of an isocyanate group,
N > 0, M >= 0, P >= 0.

## Description

### Field of the invention

The invention relates to a compound for manufacturing a watermark in a laminar textile material with urethane links and, optionally, urea, and a composition comprising a water emulsion of said compound, suitable for manufacturing a watermark in a laminar textile material, so as to create the effect of transparency in the fabric.

The invention also relates to a laminar textile material with a watermark and its manufacturing procedure.

### State of the art

Document WO 2011/086224 A2 "Compound for manufacturing a watermark in a laminar textile material and composition, material, procedure and corresponding use" describes various polyurethane compounds suitable for manufacturing watermarks in fabrics.

However, it is necessary to synthesize new products without flammable and/or harmful solvents, with equivalent or more resistance to washings.

### Summary of the invention

This purpose is achieved by means of a compound for manufacturing a watermark in a laminar textile material, having the following formula

C-W-(A-W)ₘ-(X-W)ₙ-X-(W-A)ₚ-W-C'

where
W is a radical derived from a compound from the group made up of 2,2,4-trimethyl-hexamethylene diisocyanate (TMDI), 2,4,4-trimethyl-hexamethylene diisocyanate (TMDI, in fact TMDI is a mixture of the two previous isomers), isoforon diisocyanate (IPDI) and hexamethylene diisocyanate (HDI),
every X is a radical derived from a compound from the group made up of polyethylene glycol (PEG), polypropylene glycol (PPG), dimer diol and dimethylolpropionic acid, irrespective of the remaining X, where at least one X is a radical of a compound from the group made up of polyethylene glycol and polypropylene glycol, and where W-(X-W)ₙ-X-W has a molecular weight between 750-15.000 g/mol and a NCO:OH ratio between 0.9 and 2.1,
A is a radical derived from a compound from the group made up of
NH₂-R-NH₂, where R is (CH₂)n with n between 1 and 6,
NH₂-R-NH-R', where R is (CH₂)n with n between 1 and 6 and R' is CH₂CH₂CH₂Si(OCH₃)₃ or (CH₂)₃SO₃H, and
NH₂-R" where R" is 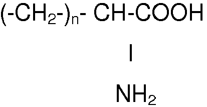 with n between 1 and 4,
C and C' are, each independent of the other, a radical derived from a compound from the group made up of diethanolamine (OH-CH₂-CH₂-NH-CH₂-CH₂-OH), CH₃-CH₂-CH₂-CH₂-NH-CH₂-CH₂-CH₂-Si(OCH₃)₃ (for example, the product sold as Dynasylan 1189), glycine (NH₂-CH₂-COOH), taurine (NH₂-CH₂-CH₂-SO₃H), homotaurine (NH₂-CH₂-CH₂-CH₂-SO₃H), 2-ethyl hexanol, N-(2-aminoethyl)-3-aminopropyltrimethoxysilane (for example, the product sold as Dynasylan DAMO), bis(trimethoxysilylpropyl)amine (for example the product sold as Dynasylan 1124 by EVONIK), monomethylated poly ethylene glycols (PEGs) (H(-O-CH₂-CH₂-)n-O-CH₃), N,N-dimethylethanolamine (DMEA, for example sold by HUNTSMAN), N,N,N'-trimethyl-N'-hydroxyethyl-bisaminoethylether (for example the product sold as Jeffcat ZF10 by HUNTSMAN), N,N-bis(3-dimethylaminopropyl)- N-isopropanolamine (for example the product sold as Jeffcat ZR50 by HUNTSMAN), 2-(2-dimethylaminoethoxy)ethanol (for example the product sold as Jeffcat ZR70 by HUNTSMAN), N,N,N'-trimethyl aminoethyl-ethanolamine (for example the product sold as Jeffcat Z110 by HUNTSMAN), dimethylaminopropylamine (DMAPA, for example sold by HUNTSMAN) and a blocking agent from a isocyanate group,
N > 0,
M >= 0,
P >= 0.

The bond between W and X is a urethane type bond, which occurs between the isocyanate groups of the compounds from which W originates and the OH groups of the compounds from which X originates.

The bond between W and A is a urea type bond, which occurs between the isocyanate groups of the compounds from which W originates and the NH₂ groups of the compounds from which A originates.

The bond between W and C can be a urethane or urea type bond, that occurs between the isocyanate groups of the compounds from which W originates and the OH groups or amine groups of the compound from which C originates.

Generally, the compound according to the invention comprises a plurality of X. For a certain compound, it is not necessary that all the X are equal, in fact, in many preferred solutions the different X within one and the same compound according to the invention are different from each other, since, as will be seen later, in the process of manufacturing the compound according to the invention, W is made to react with a mixture of various different X (strictly speaking, from various X original compounds). Therefore, the result of the reaction will be a compound according to the invention where the X making it up are also a mixture.

The dimer diol is the compound with the following formula 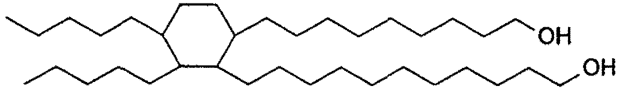 and it is sold as Pripol 2033 by CRODA.

Compound N-(2-aminoethyl)-3-aminopropyltrimethoxysilane can be both the origin of an A radical or of a C or C' radical.

The compounds according to the invention, based on polyurethane polymers, allow avoiding the use of flammable and/or harmful solvents since they are obtained as aqueous dispersions. They can be highly resistant to washing.

Preferably W is a radical derived from 2,2,4-trimethyl-hexamethylene diisocyanate and/or 2,4,4-trimethyl-hexamethylene diisocyanate.

Advantageously every X is a radical derived from a compound from the group made up of polyethylene glycol with molecular weight 400 g/mol, polypropylene glycol with molecular weight 2000 g/mol, dimer diol and dimethylolpropionic acid, irrespective of the remaining X.

Preferably W - (X - W)ₙ - X - W has a molecular weight between 750-1.000 g/mol or has a molecular weight between 6.000-11.000 g/mol. It has been observed that these two subgroups of molecular weights are particularly advantageous for specific applications, depending on the characteristics of the fabric in which it is desired to make a watermark.

Preferably W - (X - W)ₙ - X - W has an NCO:OH ratio between 1.1 and 1.3 or it has an NCO:OH ratio between 1.8 and 2.1.

Advantageously A is a radical derived from a compound from the group made up of ethylenediamine, N-(2-aminoethyl)-3-aminopropyltrimethoxysilane (such as for example Dynasylan DAMO), lysine, ethyldiamine propyl sulfonate (EPS) and hexamethylenediamine, and it is particularly advantageous that A is a radical derived from ethylenediamine or N-(2-aminoethyl)-3-aminopropyltrimethoxysilane (such as Dynasylan DAMO).

Preferably C or C' is a radical derived from N,N-dimethylethanolamine, CH₃-CH₂-CH₂-CH₂-NH-CH₂-CH₂-CH₂-Si(OCH₃)₃, N-(2-aminoethyl)-3-aminopropyltrimethoxysilane and/or bis(trimethoxysilylpropyl)amine.

It is particularly advantageous that C or C' is a radical derived from an isocyanate blocking agent. In fact, the presence of the blocking agents means that, once the watermark is being made, some isocyanates can be unblocked (for example, by raising the temperature), and these isocyanates make it possible to have more cross-linking points that improve the molecule's attachment to the fabric. Preferably the isocyanate blocking agent is a compound from the group made up of pyrazolyl, 3,5-dimethylpyrazolyl, ketoximes, aliphatic esters, amides, imides and amines, and very preferably it is 3,5-dimethylpyrazolyl.

In addition, the subordinate claims specify a plurality of particularly interesting compounds.

The aim of the invention is also a composition for manufacturing a watermark in a laminar textile material comprising the emulsion of a compound according to the invention in water. In fact, these compounds make it possible to generate an emulsion in water, which avoids the need to use flammable and/or harmful solvents. In some cases, the compounds according to the invention make it possible, also, to obtain watermarks that are more resistant to washing than known compounds.

The aim of the invention is also a laminar textile material that is made up of a transparent textile material characterized in that it comprises an area impregnated with a compound according to the invention, where said impregnated area is a watermark.

Another aim of the invention is a procedure for manufacturing a watermark in a laminar textile material, which is made with a transparent textile material, characterized in that it comprises a printing stage wherein an area of said laminar textile material is impregnated with a compound according to the invention (or a composition according to the invention), thus creating a watermark.

Finally, the aim of the invention is also the use of a compound according to the invention (or of a composition according to the invention), for impregnating an area of a laminar textile material, where said laminar textile material is made with a transparent textile material, thus creating a watermark. Preferably the laminar textile material is a label and the watermark constitutes a safety element. In the case of using the watermark as a safety element it may be admissible that the watermark is not very resistant to washing, since its main function may be to inform the buyer of the origin of the garment, as a kind of "quality guarantee certificate". In this case, once bought, it is no longer necessary that the safety element continues to exist.

### Brief description of the drawings

Other advantages and characteristics of the invention are appreciated from the following description, wherein, in a non-limiting way, some preferred embodiments of the invention are described, making reference to the accompanying drawings. The figures show:
Fig. 1, a scanning electronic microscope image (SEM) of a polyester fabric.
Fig. 2, a scanning electronic microscope image (SEM) of a cotton fabric, called "sample 1".
Fig. 3, a scanning electronic microscope image (SEM) of another cotton fabric, called "sample 2".
Fig. 4, a scanning electronic microscope image (SEM) of a mixed polyester/cotton 65/35 fabric of 122.6 g/m².
Fig. 5, a scanning electronic microscope image (SEM) of a mixed polyester/cotton 65/35 fabric of 237.7 g/m².
Fig. 6, a scanning electronic microscope image (SEM) of a mixed polyester/cotton 65/35 fabric of 410.8 g/m².
Fig. 7, table with a summary of the main characteristics of the synthesised products.
Fig. 8, table with the results of the applications on polyester.
Fig. 9, table with the results of the applications on cotton.
Fig. 10, table with the results of the applications on polyester/cotton (65%/35%) fabrics.
Fig. 11, image of a sample of a cotton fabric stamped with a watermark with the compound from example 3.
Fig. 12, image of a sample of a polyester fabric stamped with a watermark with the compound from example 11.
Fig. 13, image of a sample of polyester fabric stamped with a watermark with the compound from example 12.
Fig. 14, image of a simple of a polyester fabric stamped with a watermark with the compound from example 13.
Fig. 15, image of a simple of a cotton fabric stamped with a watermark with the compound of example 19.
Fig. 16, image of a simple of a polyester fabric stamped with a watermark with the compound of example 20.
Fig. 17, image of a simple of a cotton fabric stamped with a watermark with the compound of example 22 with a 35.0% of solids.
Fig. 18, image of a simple of a polyester fabric stamped with a watermark with the compound of example 22 with a 40.7% of solids.
Figs. 19 and 20, tables with a summary of the examples carried out.

### Detailed description of some embodiments of the invention

In a first stage of the synthesis reaction of the compounds according to the invention, a prepolymer (W-(X-W)ₙ-X-W) is formed by the reaction between the-OH groups of the compounds from which X originates with the-NCO groups of the compounds from which W originates.

In the second stage of reaction the previous prepolymer is dissolved in a THF (tetrahydrofuran), MEK (methyl ethyl ketone) and/or acetone type solvent (for example, those sold by PANREAC). These solvents represent preferably between 15% and 75% of the weight of the prepolymer. Subsequently, an emulsion is formed with water, obtaining products containing between 20 and 80% of solids.

The previous prepolymer can be lengthened by reacting it with compounds from which radical A will be obtained.

Finally, the prepolymer (lengthened or not), is capped by making it react with compounds from which radicals C and C' will be obtained. In part, the capping also occurs with the water, preferably between 1 and 20 % of the free NCO is capped with water.

Also, compounds of this type can be synthesised by blocking part or all of the isocyanate groups with a blocking agent (for example like pyrazole, 3,5-dimethylpyrazole, ketoximes, aliphatic esters, amides, imides and amines). So, it will be possible to have more crosslinking points in the molecule that attach to the fabric once the isocyanate has been unblocked and it has reacted with the fabric. However, it must be highlighted that the use of these compounds implies the need to subject the fabric to high temperatures to produce the unblocking and the reaction of these groups.

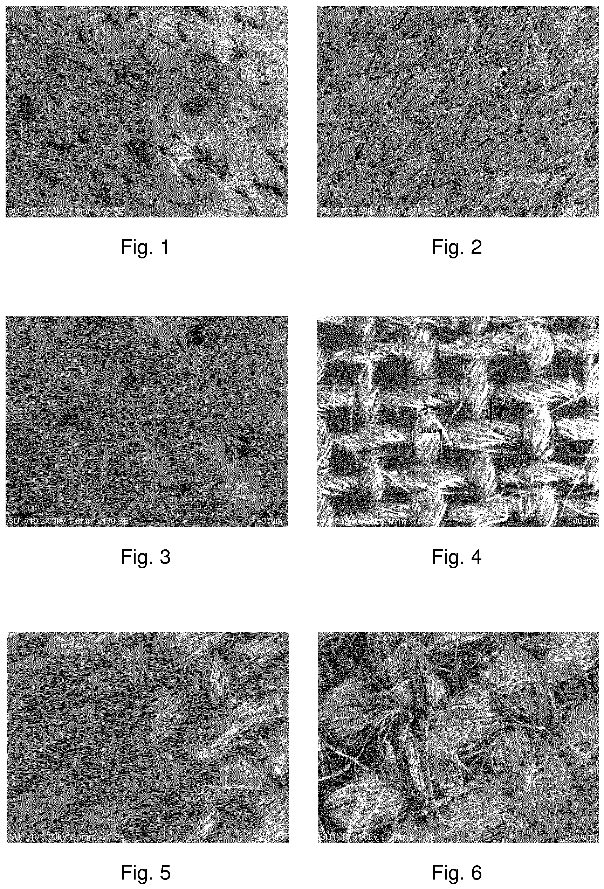

The viscosity and the particle size of the product and the hydrophobia/hydrophily and the framework of the fabric are very important parameters to take into consideration since they affect the product's penetration speed into the fabric. Apart from these parameters, the treatments conducted on the fabric must also be taken into account, such as for example a finishing with softener which changes the hydrophily of cotton. Figs. 1 to 6 show various types of fabrics. As can be seen in these figures, there are significant differences between the two samples of cotton, with sample 1 being denser than sample 2. This means that in some cases, with one and the same type of fabric the products must also adapt in order to act as a watermark. The grammage is also important as can be seen in the 3 polyester/cotton (65%/35%) mixture fabric samples. All this suggests "personalising" each compound for each type of fabric, in order to obtain optimum results.

### Examples of compound synthesis

### Example 1

A total of 128.00g of polypropylene glycol with molecular weight 2000g/mol (Voranol 2000L, DOW), 3.90g of dimer diol (Pripol 2033, CRODA) and 4.20g of DMPA (dimethylolpropionic acid, HUNTSMAN) were added to a 700ml reactor. At 120ºC and at 160 rpm, a vacuum was made to remove the water that the polyols may have contained and once dry the temperature was lowered to 60ºC and 27.80g of IPDI (isoforon diisocyanate, Vestanat IPDI, EVONIK) were added. It was left to react at 85ºC until it reached NCO=1.167%. Then, the temperature was lowered to 50ºC, and when it was about 70ºC 44.33g of dry MEK (PANREAC) were added with a dropping funnel and in 5 minutes, when the temperature reached 55ºC 174.80g of dry acetone (PANREAC) were added with a dropping funnel and in 20-35 minutes.

Once the solvents were added and at 20ºC, 3.33g of triethylamine (BASF) were added, immediately the emulsion was made with 245.00g of cold water in 30-40 minutes and at 250-400rpm. Subsequently, 0.32g of EDA (ethylenediamine, PANREAC) in 8.78g of water were added, and 3 minutes later 0.55g of DEA (diethanolamine, PANREAC) in 8.78g of water and immediately 5.30g of N-(n-Butyl)-3-aminopropyltrimethoxysilane (Dynasylan 1189, EVONIK) in 5.30g of acetone. 10 minutes after the addition, the solvents were distilled at 50ºC.

A white bluish emulsion was obtained.

### Example 2

A total of 53.73g of polyester (Hoopol S-1015-120, SYNTESIA) were added to a 700ml reactor and at 120ºC a vacuum was made for 40 minutes to remove the water that may have been contained. Under a nitrogen stream 45.30g of HDI (Hexamethylene diisocyanate, Desmodur H, BAYER) were added. It was left to react at 80-85ºC and at 160 rpm until it reached NCO=18.062%, in this case the percentage of experimental NCO obtained through tritation was 17.390%. Then, the temperature was lowered to 60ºC and 7.81g of NPG (neopentyl glycol, PERSTORP) and 8.20g of DEG (diethylene glycol, PANREAC) in 8.28g of dry acetone (PANREAC) were added. It was left to react until it reached NCO=3.692%, in this case the percentage of experimental NCO obtained through tritation was 3.428%. At 50ºC, 153.17g of dry acetone was added with a dropping funnel and in 20-35 minutes

Once the solvent was added, 14.13g of EPS (ethyldiamine propyl sulfonate, RASCHIG) in 2.17g of KOH 1N (potassium hydroxide, PANREAC) and 13.86g of distilled water were added, immediately the emulsion was made with 222.66g of distilled water in 30-40 minutes and at 250-400 rpm. 10 minutes after the addition the solvents were distilled at 50ºC.

A white, bluish emulsion was obtained.

### Example 3

A total of 90.24g of polypropylene glycol with molecular weight 2000g/mol (Voranol 2000L, DOW) and 2.74g of dimer diol (Pripol 2033, CRODA) were added to a 700ml reactor. At 80ºC and at 160 rpm, a vacuum was made to remove the water that the polyols may have contained and once dry 4.25g of DMPA (dimethylolpropionic acid, HUNTSMAN) were added with a nitrogen stream, and it was left to react for 5 minutes and 20.90g of IPDI (Isoforon diisocyanate, Vestanat IPDI, EVONIK) were added. It was left to react until it reached NCO=0.875%, in this case the percentage of experimental NCO obtained through tritation was 0.766%. Then, the nitrogen was disconnected and the temperature was lowered to 50ºC, and when it was at about 70ºC, 27.38g of dry MEK (PANREAC) was added with a dropping funnel and in 5 minutes, when the temperature reached 55ºC,75.38g of dry acetone (PANREAC) was added with a dropping funnel and in 20-25 minutes.

Once the solvents were added and at 20ºC, 3.36g of triethylamine (BASF) was added, immediately the emulsion was made with 261.4g of cold water and in 30-40 minutes and at 250-400 rpm. It was checked that the pH was above 8 (pH=9.7) and in 2-5 minutes 4.79g of N-(n-Butyl)-3-aminopropyltrimethoxysilane (Dynasylan 1189, EVONIK) + 6.22g of MEK were added. 10 minutes after the addition the solvents were distilled at 50ºC.

A white, bluish emulsion was obtained.

### Example 4

Example 3 was repeated but adding, once the emulsion was made, 0.12g of EDA (ethylenediamine, PANREAC) in 10.03g of water, 0.21g of DEA (diethanolamine, PANREAC) in 10.01 g of water and 1.97g of N-(n-Butyl)-3-aminopropyltrimethoxysilane (Dynasylan 1189, EVONIK) in 6.06g of acetone. 10 minutes after the addition the solvents were distilled at 50ºC.

A white, bluish emulsion was obtained.

### Example 5

Example 3 was repeated but adding, once the emulsion was made, 0.07g of EDA (ethylenediamine, PANREAC) in 10.00g of water, 0.52g of DEA (diethanolamine, PANREAC) in 10.41g of water and 2.49g of N-(n-Butyl)-3-aminopropyltrimethoxysilane (Dynasylan 1189, EVONIK) in 8.90g of acetone. 10 minutes after the addition the solvents were distilled at 50ºC.

A white, bluish emulsion was obtained.

### Example 6

A total of 55.91g of polyester (Priplast 3162, CRODA) was added to a 700ml reactor and at 120ºC a vacuum was made for 40 minutes to remove the water that may have been contained. Under a nitrogen stream 45.19g of HDI (hexamethylene diisocyanate, Desmodur H, BAYER) were added. It was left to react at 80-85ºC and at 160 rpm until it reached NCO=22.320%, in this case the percentage of experimental NCO obtained through tritation was 17.880%. Then, the temperature was lowered to 60ºC and 7.81g of NPG (neopentyl glycol, PERSTORP) and 8.21g of DEG (diethylene glycol, PANREAC) in 8.49g of dry acetone (PANREAC) were added. It was left to react at 60ºC until it reached NCO=4.022%, in this case the percentage of experimental NCO obtained through tritation was 3.468%. The temperature of the reactor was lowered to 50ºC and 140.45g of dry acetone were added with a dropping funnel and in 20-25 minutes.

Once the solvent was added, 14.62g of EPS (ethyldiaminopropyl sulfonate, RASCHIG) in 2.24g of KOH 1N (potassium hydroxide, PANREAC) and 22.51 g of distilled water were added, after 15 minutes the emulsion was made with 239.02g of water in 30-40 minutes and at 250-400 rpm. 10 minutes after the addition the solvents were distilled at 50°C.

A white, bluish emulsion was obtained.

### Example 7

Example 6 was repeated but adding 2.69g of N-(n-Butyl)-3-aminopropyltrimethoxysilane (Dynasylan 1189, EVONIK) in 34.45g of dry acetone before making the emulsion.

### Example 8

A total of 315.25g of polypropylene glycol with molecular weight 2000 g/mol (Voranol 2000L, DOW), 12.09g of dimer diol (Pripol 2033, CRODA), 10.21g of DMPA (dimethylolpropionic acid, HUNTSMAN) and 68.54g of IPDI (isoforon diisocyanate, Vestanat IPDI, EVONIK) were added to a 2l reactor. It was left to react at 80ºC and at 110 rpm until it reached NCO=1.094%, in this case the percentage of experimental NCO obtained through tritation was 0.982%. Then, the temperature was lowered to 50ºC, and when it was at about 70ºC, 115.82g of dry MEK (PANREAC) were added with a dropping funnel and in about 15 minutes, when the temperature reached 55ºC, 419.79g of dry acetone (PANREAC) were added with a dropping funnel and in 20-35 minutes

Once the solvents were added and at 20ºC, 8.10g of triethylamine (BASF) was added, immediately the emulsion was made with 577.90g of cold water in 30-40 minutes and at 250-400 rpm. After 3 minutes the polymer was lengthened with 0.65g of ethylenediamine (EDA, PANREAC) in 10.02g of water, after a further 3 minutes, the polymer was capped with 1.30g of diethanolamine 98% (DEA, PANREAC) in 10.02g of water and with 10.96g of N-(n-Butyl)-3-aminopropyltrimethoxysilane (Dynasylan 1189, EVONIK) in 9.98g of MEK. It was checked that the pH was above 8, pH=8.95 and 10 minutes after the addition, the solvents were distilled at 50ºC.

A white, bluish emulsion was obtained.

### Example 9

A total of 57.07g of polyester (Priplast 3162, CRODA) were added to a 700ml reactor and at 120ºC a vacuum was made for 40 minutes to remove the water that may have been contained. Under a nitrogen stream 39.89g of HDI (hexamethylene diisocyanate, Desmodur H, BAYER) were added. It was left to react at 80-85ºC and at 160 rpm until it reached NCO=15.66%, in this case the percentage of experimental NCO obtained through tritation was 15.090%. Then, the temperature was lowered to 60ºC and 3.90g of NPG (neopentyl glycol, PERSTORP) and 8.21g de DEG (diethylene glycol, PANREAC) in 8.32g of dry acetone (PANREAC) were added. It was left to react at 60ºC until it reached NCO=4.426%, in this case the percentage of experimental NCO obtained through tritation was 3.807%. The temperature of the reactor was lowered to 50ºC and 152.18g of dry acetone were added with a dropping funnel and in 20-35 minutes.

Once the solvent was added, 14.01 g of EPS (ethyldiaminopropyl sulfonate, RASCHIG) in 2.19g of KOH 1N (potassium hydroxide, PANREAC) and 21.45g of distilled water were added, and after 15 minutes the emulsion was made with 169.71g of water in 30-40 minutes and at 250-400 rpm. 10 minutes after the addition the solvents were distilled at 50ºC.

A white, bluish emulsion was obtained.

### Example 10

A total of 324.90g of polypropylene glycol with molecular weight 2000 g/mol (Voranol 2000L, DOW), 12.10g of dimer diol (Pripol 2033, CRODA), 9.59g of DMPA (dimethylolpropionic acid, HUNTSMAN) and 68.60g of IPDI (isoforon diisocyanate, Vestanat IPDI, EVONIK) were added to a 2l reactor. It was left to react at 80ºC and at 110 rpm until it reached NCO=1.071%, in this case the percentage of experimental NCO obtained through tritation was 0.998%. Then, the temperature was lowered to 50ºC, and when it was at about 70ºC, 115.78g of dry MEK (PANREAC) were added with a dropping funnel and in 15 minutes, when the temperature reached 55ºC, 420.00g of dry acetone (PANREAC) were added with a dropping funnel and in 20-35 minutes

Once the solvents were added at 20ºC, 7.60g of triethylamine (BASF) were added, and immediately the emulsion was made with 566.93g of cold water in 30-40 minutes and at 250-400 rpm. After 3 minutes the polymer was lengthened with 0.83g of ethylene diamine (EDA, PANREAC) in 10.06g of water, and after a further 3 minute, the polymer was capped with 1.48g of diethanolamine 98% (DEA, PANREAC) in 10.03g of water and with 8.76g of N-(n-Butyl)-3-aminopropyltrimethoxysilane (Dynasylan 1189, EVONIK) in 10.00g of acetone. It was checked that the pH was above 8, pH=9.31 and 10 minutes after the addition, the solvents were distilled at 50ºC.

A white emulsion was obtained.

### Example 11

A total of 90.28g of polypropylene glycol with molecular weight 2000 g/mol (Voranol 2000L, DOW) and 2.75g of dimer diol (Pripol 2033, CRODA) were added to a 700ml reactor. At 120ºC and at 140rpm, the vacuum was made to remove the water that the polyols may have contained and once dry, the temperature was lowered to 60ºC and 4.24g of DMPA (dimethylpropionic acid, HUNTSMAN) were added, and it was left under stirring for 10 minutes and then 19.81g of TMDI (2,2,4- and 2,4,4-trimethyl-hexamethylene diisocyanate, Vestanat TMDI, EVONIK) were added. It was left to reach at 90ºC until it reached NCO=0.899%, in this case the percentage of experimental NCO obtained through tritation was 0.662%. Then, the temperature was lowered to 50ºC, and when it was about 70ºC, 27.96g of dry MEK (PANREAC) were added with a dropping funnel and in 5 minutes, and when the temperature reached 55ºC, 74.90g of dry acetone (PANREAC) were added with a dropping funnel and in 20-35 minutes

Once the solvents were added and at 20ºC 3.36g of triethylamine (BASF) were added, and immediately the emulsion was made with 216.58g of cold water in 30-40 minutes and at 250-400 rpm. It was checked that the pH was above 8 (pH=9.82) and 3.31g of N-(n-Butyl)-3-aminopropyltrimethoxysilane (Dynasylan 1189, EVONIK) in 4.31g of MEK in 2-5 minutes were added. 10 minutes after the addition the solvents were distilled at 50°C.

A white, bluish emulsion was obtained.

### Example 12

Example 10 was repeated with TMDI instead of IPDI so that the end production was more fluid.

A white, bluish emulsion was obtained, more fluid than in the case of Example 10.

### Example 13

A total of 92.89g of polypropylene glycol with molecular weight 2000 g/mol (Voranol 2000L, DOW) and 3.54g of dimer diol (Pripol 2033, CRODA) were added to a 700ml reactor, the vacuum was connected at 120ºC for 30 minutes to dry the polyols. The vacuum was disconnected and at 60ºC, 2.76g of DMPA (dimethylolpropionic acid, HUNTSMAN) and 18.38g of TMDI (2,2,4- and 2,4,4-trimethyl-hexamethylene diisocyanate, Vestanat TMDI, EVONIK) were added. It was left to react at 80ºC and at 150 rpm until it reached NCO=1.002%, in this case the percentage of experimental NCO obtained through tritation was 0.948%. Then, the temperature was lowered to 50ºC, and when it was at about 70ºC, 31.55g of dry MEK (PANREAC) were added with a dropping funnel and in 15 minutes, and when the temperature reached 55ºC, 124.00g of dry acetone (PANREAC) were added with a dropping funnel and in 20-35 minutes.

Once the solvents were added and at 20ºC, 2.20g of triethylamine (BASF) were added, and immediately the emulsion was made with 205.05g of cold water in 30-40 minutes and at 250-400 rpm. After 3 minutes the polymer was capped with 0.39g of diethanolamine 98% (DEA, PANREAC) in 2.38g of water and with 4.14g of N-(n-Butyl)-3-aminopropyltrimethoxysilane (Dynasylan 1189, EVONIK) in 8.25g of acetone. 10 minutes after the addition the solvents were distilled at 50ºC.

A white emulsion was obtained.

### Example 14

Example 10 was repeated with polypropylene glycol with molecular weight 4000 instead of 2000.

A white, bluish emulsion was obtained more fluid than in the case of Example 10.

### Example 15

Example 11 was repeated with EDA and DEA.

3 minutes after finishing the emulsion, the polymer was lengthened with 2.07g of EDA in 5.10g of water and the polymer was capped with 1.81g of DEA in 4.99g of water and with 3.76g of N-(n-Butyl)-3-aminopropyltrimethoxysilane in 9.49g of acetone. 10 minutes after the addition the solvents were distilled at 50ºC.

A white, bluish emulsion is obtained.

In this example, an excess of amines has been added so that the product is more soluble with the fabric, but it was observed that over time it was not stable.

### Example 16

A total of 2.70g of DMPA, 2.77g of dimer diol and 92.58g of polypropylene glycol with molecular weight 2000 g/mol were added to a 700ml reactor. At 120ºC and at 60rpm, the vacuum was made to remove the water that the polyols may have contained and once dry, the temperature was lowered to 60ºC and stirring was increased to 190 rpm. In 10 minutes 17.58g of TMDI were added.

It was left to react at 85ºC until it reached NCO=0.889%, in this case the percentage of experimental NCO obtained through tritation was 0.872%. Then, the temperature was lowered to 50ºC, and when it was at about 70ºC, 27.72g of dry MEK were added with a dropping funnel and in 5 minutes, and when the temperature reached 55ºC, 74.30g of dry acetone were added with a dropping funnel and in 20-35 minutes.

Once the solvents were added and at 20ºC, 2.14g of triethylamine were added, and immediately the emulsion was made with 117.52g of cold water in 30-40 minutes and at 250-400 rpm. It was checked that the pH is above 8 (pH=10.37) and 0.13g of EDA in 2.37g of water were added, and 2-3 minutes later 2.79g of N-(n-Butyl)-3-aminopropyltrimethoxysilane in 7.79g of acetone. 10 minutes after the addition the solvents were distilled at 50ºC.

A white, bluish emulsion was obtained.

### Example 17

A total of 2.67g of DMPA (dimethylolpropionic acid, HUNTSMAN), 2.74g of dimer diol (Pripol 2033, CRODA) and 92.51g of polypropylene glycol with molecular weight 2000 g/mol (Voranol 2000L, DOW) were added to a 700ml reactor. At 120ºC and at 60 rpm, the vacuum was made to remove the water that the polyols may have contained and once dry, the temperature was lowered to 60ºC and stirring was increased to 190 rpm. In 10 minutes, 17.57g of TMDI (2,2,4- and 2,4,4-trimethyl-hexamethylene diisocyanate, Vestanat TMDI, EVONIK) were added.

It was left to react at 90ºC until it reached NCO=0.909%, in this case the experimental NCO obtained through tritation was 0.867%. Then, the temperature was lowered to 50ºC, and when it was at about 70ºC, 26.75g of dry MEK (PANREAC) were added with a dropping funnel and in 5 minutes, and when the temperature reached 55ºC, 74.45g of dry acetone (PANREAC) were added with a dropping funnel and in 20-35 minutes.

Once the solvents were added and at 20ºC, 2.11g of triethylamine (BASF) were added, and immediately the emulsion was made with 144.00g of cold water in 30-40 minutes and at 250-400 rpm. It was checked that the pH was above 8 (pH=10.50) and in 2-5 minutes, 3.44g of N-(n-Butyl)-3-aminopropyltrimethoxysilane (Dynasylan 1189, EVONIK) in 9.79g of acetone were added. 10 minutes after the addition the solvents were distilled at 50ºC.

A transparent, bluish emulsion was obtained.

### Example 18

Example 17 was repeated with 2.6% less DMPA and halving the time for making the emulsion.

A transparent, bluish emulsion was obtained.

### Example 19

A total of 2.37g of DMPA, 2.82g of dimer diol and 92.46g of polypropylene glycol with molecular weight 2000 g/mol were added to a 700ml reactor. At 120ºC and at 60 rpm, the vacuum was made to remove the water that the polyols may have contained and once dry, the temperature was lowered to 60ºC and stirring was increased to 160rpm. In 10 minutes 18.10g of TMDI were added.

It was left to react at 90ºC until it reached NCO=1.245%, in this case the percentage of experimental NCO obtained through tritation was 1.224%. Then, the temperature was lowered to 50ºC, and when it was at about 70ºC, 29.00g of dry MEK were added with a dropping funnel and in 5 minutes, and when the temperature reached 55ºC, 77.49g of dry acetone were added with a dropping funnel and in 20-35 minutes.

Once the solvents were added and at 20ºC, 1.88g of triethylamine were added, and immediately the emulsion was made with 154.06g of cold water in 30-40 minutes and at 250-400 rpm. It was checked that the pH was above 8 (pH=8.43) and in 2-5 minutes 0.24g of EDA in 4.03g of water were added and next 1.96g of N-(2-Aminoethyll)-3-aminopropyltrimethoxysilane in 6.33g of acetone were added. 10 minutes after the addition the solvents were distilled at 50ºC.

A transparent, bluish emulsion was obtained.

### Example 20

A total of 4.25g of DMPA, 2.82g of dimer diol, 90.82g of polypropylene glycol with molecular weight 2000 g/mol and 0.015g of a phosphoric acid solution at 6.21% in acetone were added to a 700ml reactor. At 120ºC and at 60 rpm, the vacuum was made to remove the water that the polyols may have contained and once dry, the temperature was lowered to 60ºC and stirring was increased to 160 rpm. In 10 minutes 19.64g of TMDI were added.

It was left to react at 80ºC until it reached NCO=0.819%, in this case the percentage of experimental NCO obtained through tritation was 0.817%. Then, the temperature was lowered to 50ºC, and when it was at about 70ºC, 29.35g of dry MEK were added with a dropping funnel and in 5 minutes, and when the temperature reached 55ºC, 76.00g of dry acetone were added with a dropping funnel and in 20-35 minutes

Once the solvents were added and at 20ºC, 1.95g of triethylamine were added, and 2 minutes later 0.25g of ethylenediamine in 19.13g of water were added and next 1.84g of N-(n-Butyl)-3-aminopropyltrimethoxysilane in 7.97g of acetone were added. It was checked using infrared spectroscopy (IR) that NCO groups remained without reacting and immediately the emulsion was made with 129.65g of cold water in 30-40 minutes and at 250-400 rpm. 10 minutes after the addition the solvents were distilled at 50ºC.

A white, bluish emulsion was obtained.

### Example 21

Example 19 was repeated but without EDA, from the free NCO equivalents that the prepolymer contains, 15% are allowed to react with the water from the emulsion and 85% are allowed to react with the silane.

A white, bluish emulsion was obtained.

### Example 22

A total of 2.38g of DMPA, 2.84g of dimer diol, 92.52g of polypropylene glycol with molecular weight 2000 g/mol (Voranol 2000L, DOW) and 0.0989g of a phosphoric acid solution (PANREAC) at 2.14% in acetone, were added to a 700ml reactor. At 120ºC and at 60 rpm, the vacuum was made to remove the water that the polyols may have contained and once dry, the temperature was lowered to 60ºC and the stirring was increased to 160 rpm. In 10 minutes 18.09g of TMDI (2,2,4- and 2,4,4-trimethyl-hexamethylene diisocyanate, Vestanat TMDI, EVONIK) were added.

It was left to react at 80ºC until it reached NCO=1.233%, in this case the percentage of experimental NCO obtained through tritation was 1.121%. Then, the temperature was lowered to 50ºC, and when it was at about 70ºC, 28.52g of dry MEK (PANREAC) were added with a dropping funnel and in 5 minutes, and when the temperature reached 55ºC, 77.89g of dry acetone (PANREAC) were added with a dropping funnel and in 20-35 minutes

Once the solvents were added and at 20ºC, 1.91g of triethylamine (BASF) were added and immediately the emulsion was made with 129.65g of cold water in 30-40 minutes and at 250-400 rpm, after 10 minutes 0.23g of ethylenediamine in 4.28g of water were added and next 3.65g N-(2-Aminoethyl)-3-aminopropyltrimethoxysilane (Dynasylan DAMO, EVONIK) in 7.09g of acetone were added. 10 minutes after the addition the solvents were distilled at 50ºC.

A transparent, bluish emulsion was obtained.

### Example 23

Example 20 was repeated but with a smaller proportion of DMPA, 22.6% less.

A white, bluish emulsion was obtained.

### Example 24

Example 22 was repeated but with a smaller proportion of DMPA, 22.4% less.

A white, bluish emulsion was obtained.

### Example 25

A total of 6.1971g of PEG400 (Polyethylene glycol with molecular weight 400, CAMP Y JOVE) were added to a 100ml reactor and dried for 30 minutes at 120ºC. At 40ºC, 0.0052g of DBTL (dibutyl tin dilaurate, EVONIK) in 0.2069g of dry MEK were added, next 6.6856g of TMDI were added and it was left to react for 2 hours. A total of 2.8294g of 2-ethylhexanol (PROQUIBASA) were added and it was left to react for 2 more hours. A total of 0.3525g of Dynasylan 1189 was added and it was left to react for 30 minutes. At 40ºC and at 400 rpm, 0.5607g of glycine (PANREAC) in 0.1806g of NaOH (PANREAC) and 1.0000g of water were added. Then, 5 minutes later 10.7381g of water were added and it was left under stirring for 12 hours.

A transparent emulsion with moderate viscosity was obtained.

### Example 26

A total of 1.5692g of dimer diol and 5.4630g of PEG400 were added to a 100ml reactor, the polyols were dried for 30 minutes at 120ºC. At 40ºC, 0.0084g of DBTL (dibutyl tin dilaurate, EVONIK) in 0.3326g of dry MEK were added, and next 7.0770g of TMDI were added and left to react for 2 hours. A total of 1.7264g of 2-ethylhexanol were added and left to reactor for 2 more hours. A total of 0.4241 g of Dynasylan 1189 were added and left to reactor for 30 minutes. At 40ºC and at 400 rpm, 1.4029g of glycine (PANREAC) in 0.7855g of NaOH (PANREAC) and 4.0000g of water were added. 5 minutes later 20.9834g of water were added and left under stirring for 12 hours.

A transparent emulsion was obtained, with moderate viscosity.

### Example 27

A total of 1.5272g of dimer diol and 5.4129g of PEG400 were added to a 100ml reactor, and the polyols were dried for 30 minutes at 120ºC.

At 40ºC and 100 rpm, 0.0083g of DBTL (dibutyl tin dilaurate, EVONIK) were added in 0.3257g of dry MEK, and next 7.0123g of TMDI were added and left to react for 2-3 hours, and using IR it was checked that the NCO signal remained stable. A total of 0.8006g of 2-ethylhexanol were added and left to react for 2 more hours, and once the NCO signal became stable again, 0.4157g of Dynasylan 1189 were added and left to react for 30 minutes, then 2.1522g of DMEA (N,N-dimethylethanolamine, HUNTSMAN) were added and once it was checked, using IR, that there was no signal from the NCO group, the temperature was lowered to 30ºC and the prepolymer was dissolved with 4.4461g of THF (tetrahydrofuran, PANREAC), and 25 minutes later 1.5281g of acetic acid (PANREAC) were added. 25 minutes later the emulsion was made at room temperature and at 400 rpm with 23.8516g of water and a transparent emulsion was obtained, with moderate viscosity.

### Example 28

A total of 1.5611 g of dimer diol and 5.7329g of PEG400 were added to a 100ml reactor, and the polyols were dried for 30 minutes at 120ºC.

At 40ºC and 100 rpm, 0.0083g of DBTL (dibutyl tin dilaurate, EVONIK) in 0.3257g of dry MEK were added, and next 7.3086g of TMDI were added and left to react for 2-3 hours, then it was checked using IR that the NCO signal remained stable. A total of 0.4335g of 2-ethylhexanol were added and left to react for 2 more hours, and once the NCO signal was stable again, 0.5958g of Dynasylan 1124 (Bis(trimethoxysilylpropyl)amine, EVONIK) were added and left to react for 30 minutes, 2.5025g of DMEA (N,N-dimethylethanolamine, HUNTSMAN) were added and once it was checked using IR that no signal remained from the NCO group, the temperature was lowered to 30ºC and the prepolymer was dissolved with 6.2083g of THF (tetrahydrofuran, PANREAC), and 25 minutes later 1.7691 g of acetic acid (PANREAC) were added. 25 minutes later the emulsion was made at room temperature and at 400 rpm with 24.4380g of water, and a transparent emulsion was obtained with moderate viscosity.

### Example 29

A total of 6.6221 g of PEG400 were added to a 100ml reactor and dried for 30 minutes at 120ºC.

At 40ºC and 100 rpm, 0.0055g of DBTL (dibutyl tin dilaurate, EVONIK) in 0.2183g of dry MEK were added, and next 7.0525g of TMDI were added and left to react for 2-3 hours, and it was checked using IR that the NCO signal remained stable.

A total of 1.6317g of 3,5 dimethylpyrazole (FLUOROCHEM) were added and left to react for 2 more hours, and once the NCO signal was stable again, 0.3277g of Dynasylan 1189 were added and left to react for 30 minutes, and then 0.9925g of DMEA (N,N-dimethylethanolamine, HUNTSMAN) were added and once it had been checked using IR that no signal from the NCO group remained, the temperature was lowered to 30ºC and the prepolymer was dissolved with 7.2572g of THF (tetrahydrofuran, PANREAC), and 25 minutes later 0.7211 g of acetic acid (PANREAC) were added. Then, 25 minutes later the emulsion was made at room temperature and at 400 rpm with 20.3459g of water, and a transparent emulsion was obtained with moderate viscosity.

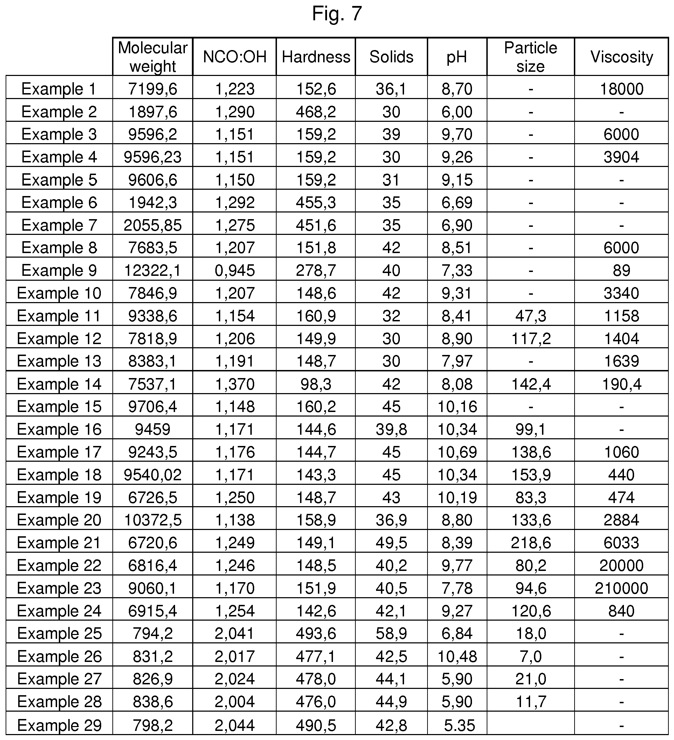

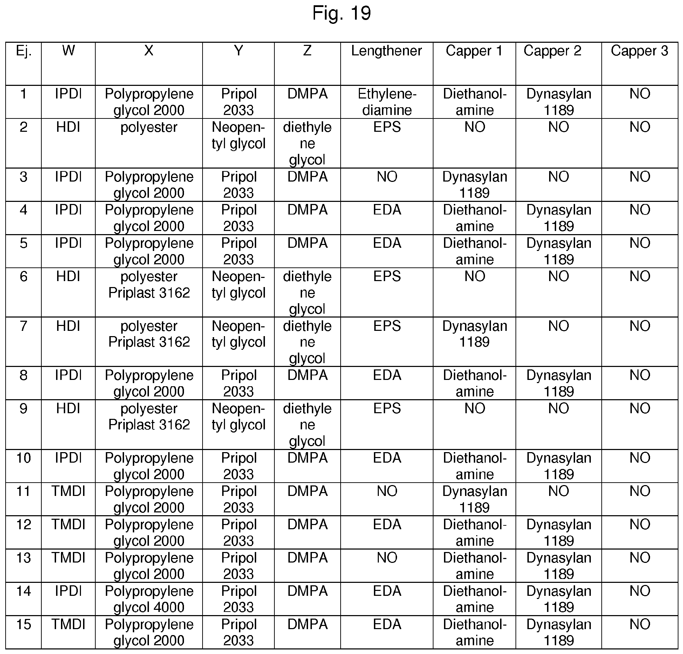

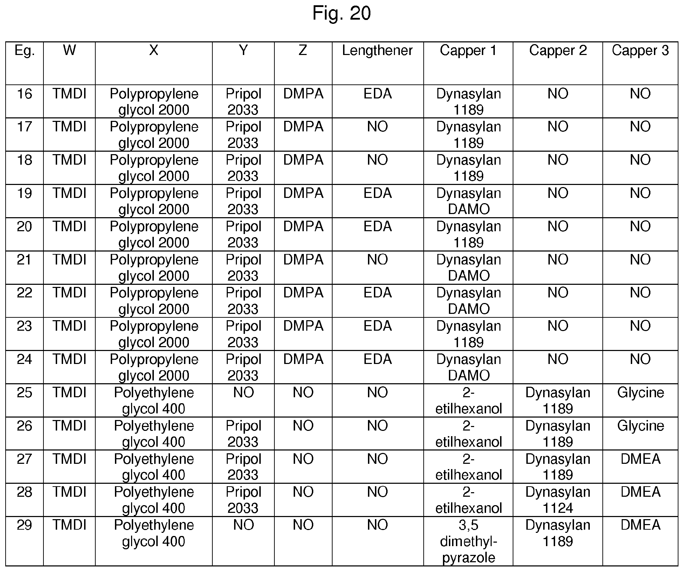

Figs. 19 and 20 show some tables with a summary of the examples carried out and Fig. 7 shows a table with a summary of the main characteristics of the synthesized products.

Generally, to reduce the tackiness of some of the synthesised products, BYK-378 (sold by BYK) type additives can be used at levels of 0.01 to 0.5% with respect to the total weight of the product. Also, if it were necessary to increase the viscosity of the product, Rheolate 278 (sold by ELEMENTIS) type additives can be used at levels of 0.4 to 2%. Also wetting agents can be used at levels of 0.5 to 3% to increase the product's penetration into the fabric, such as EMPILAN KR 6/90, EMPILAN Kl8 65 (both sold by HUNTSMAN) and/or ANTAROX FM33 (sold by RHODIA).

### Application on fabrics

The synthesised products are applied to polyester and cotton fabrics with a 24 µm applicator and at room temperature. Once applied they undergo a thermal treatment by putting them in the oven at 80ºC for 2 minutes. In the case of the compounds with blocked isocyanates, the thermal treatment is at 120ºC.

Alternatively, the products can be stamped onto the fabric manually with a flat template containing some recommended designs to value the definition and penetration of the stamps, and immediately they undergo drying-setting at 80ºC for 2 minutes and then they are ironed at 110ºC.

Simultaneously various products have been studied, which are available on the market, to see if they have the same properties as the synthesised products and to check whether also they can be used as a watermark. These products are adhesives based on aliphatic polyurethanes with a high concentration aqueous base (between 49-61% of solids). The products studied are as follows:
BONDTHANE UD-375 60% solids
BONDTHANE XP-158E 55% solids
BONDTHANE XP-160D 55% solids
ALBERDINGK U180VP 49-51% solids
ALBERDINGK U199VP 59-61% solids
ALBERDINGK U216VP 59-61% solids

These products are applied to fabrics following the same procedure described above.

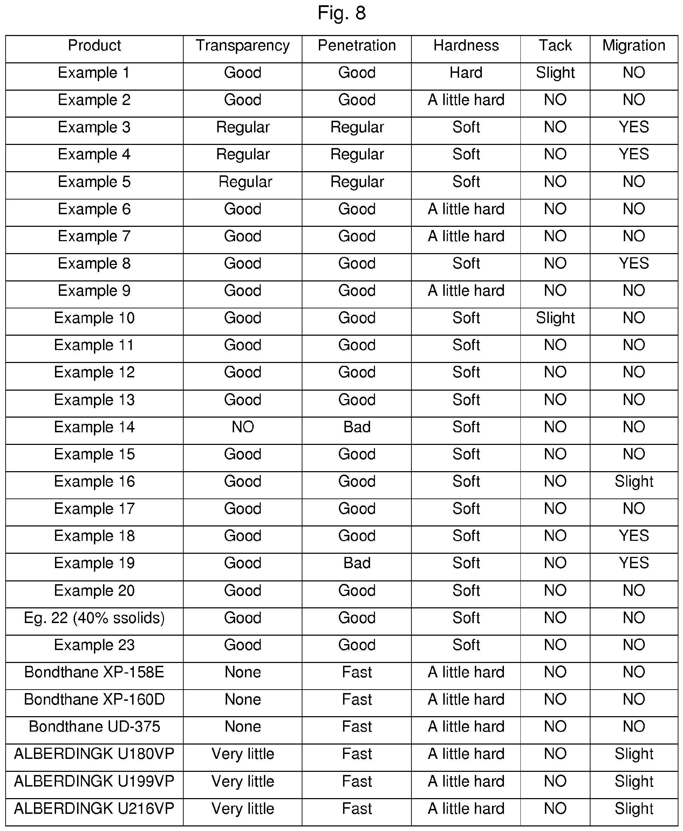

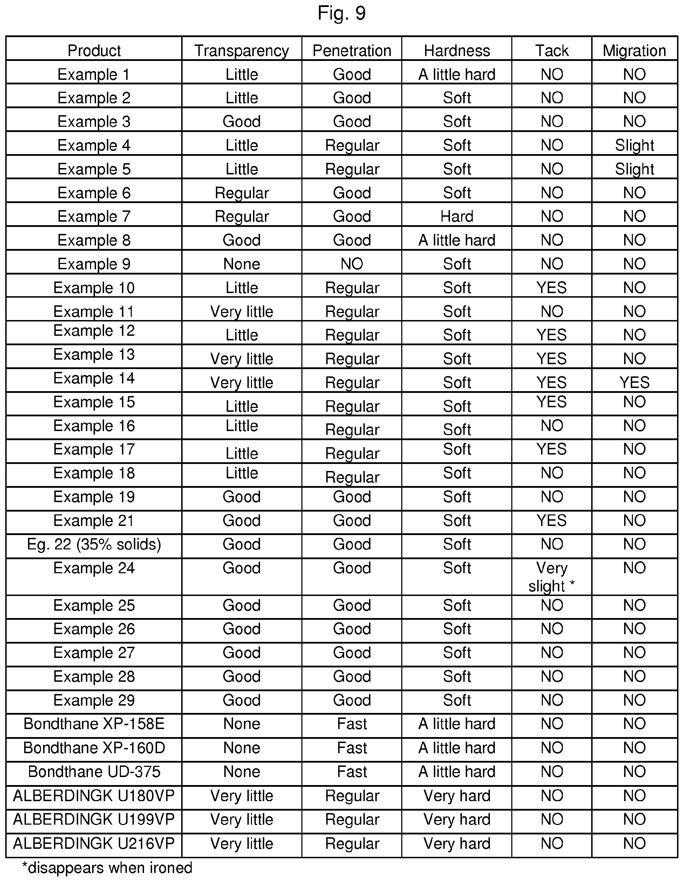

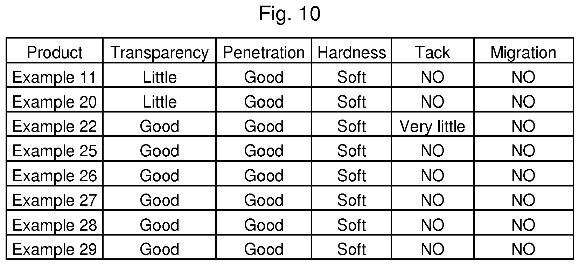

Figs. 8, 9 and 10 contain tables with the results of the applications on polyester, cotton and polyester/cotton (65%/35%), respectively.

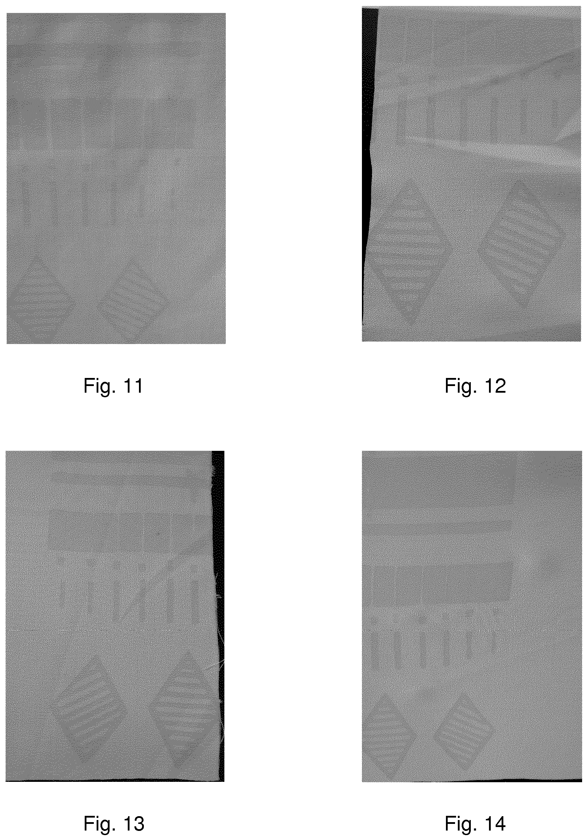

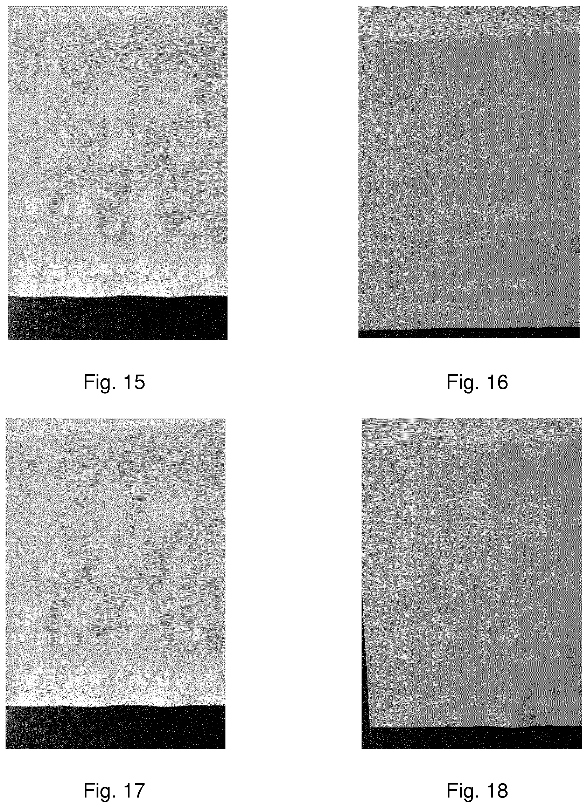

Figs. 11 - 18 show images of fabric samples stamped with a watermark containing a compound according to the invention.

### Washing resistance

To check the washing resistance of the watermarks, 5 g of fabric with the watermark are weighed and they are put in a container together with 0.08 g of liquid detergent and 45 ml of water at 60ºC. The container is stirred with a mechanical stirrer for 1 hour and the fabric is rinsed with water, the water is drained and the fabric is left to dry. Once dry, it is checked whether the watermark has withstood the washing. If it does withstand it, this procedure is repeated until the watermark is no longer seen, or it is repeated up to 20 times without the watermark disappearing.

The following examples have been evaluated: 11, 12, 13, 15, 17, 19, 20, 22, 23, 24, 25, 26, 27, 28 and 29.

All the samples assessed withstood the 20 washings at 60ºC, except for Examples 25 and 26. In order to increase the washing resistance of the synthesised products according to Examples 25 and 26, an external crosslinking agent must be added, such as for example a blocked or non-blocked isocyanate.

Based on the above results, it can be concluded that for polyester fabrics the best products are preferably those synthesised according to Examples 11, 12, 13, 15, 17, 20, 22 (40.7% solids) and 23. For cotton fabrics (like sample 1), the best products are preferably those synthesised according to Example 3, 19, 22 (35.0% of solids) and 24. For cotton fabrics (like sample 2), the best products are preferably those synthesised according to Example 25, 26, 27, 28 and 29. For the polyester/cotton mix fabrics (like samples 1,2 and 3), the best products are preferably those synthesised according to Example 25, 26, 27, 28 and 29.

## Claims

1. Compound for manufacturing a watermark in a laminar textile material, having the formula
C-W-(A-W)ₘ-(X-W)ₙ-X-(W-A)ₚ-W-C'
where
W is a radical derived from a compound from the group made up of 2,2,4-trimethyl-hexamethylene diisocyanate, 2,4,4-trimethyl-hexamethylene diisocyanate, isoforon diisocyanate and hexamethylene diisocyanate,
every X is a radical derived from a compound from the group made up of polyethylene glycol, polypropylene glycol, dimer diol and dimethylolpropionic acid, irrespective of the remaining X, where at least one X is a radical of a compound from the group made up of polyethylene glycol and polypropylene glycol, and where W-(X-W)ₙ-X-W has a molecular weight between 750-15.000 g/mol and a NCO:OH ratio between 0.9 and 2.1,
A is a radical derived from a compound from the group made up of
NH₂-R-NH₂, where R is (CH₂)n with n between 1 and 6,
NH₂-R-NH-R', where R is (CH₂)n with n between 1 and 6 and R' is CH₂CH₂CH₂Si(OCH₃)₃ or (CH₂)₃SO₃H, and
NH₂-R" where R" is 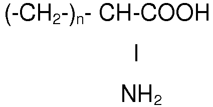 with n between 1 and 4,
C and C' are, each independent of the other, a radical of a compound from the group made up of diethanolamine, CH₃-CH₂-CH₂-CH₂-NH-CH₂-CH₂-CH₂-Si(OCH₃)₃, glycine, taurine, homotaurine, 2-ethyl hexanol, N-(2-aminoethyl)-3-aminopropyltrimethoxysilane, bis(trimethoxysilylpropyl)amine, monomethylated poly ethylene glycols, N,N-dimethylethanolamine, N,N,N'-trimethyl-N'-hydroxyethyl-bisaminoethylether, N,N-bis(3-dimethylaminopropyl)- N-isopropanolamine, 2-(2-dimethylaminoethoxy)ethanol, N,N,N'-trimethyl aminoethyl-ethanolamine, dimethylaminopropylamine and a blocking agent from a isocyanate group,
N > 0,
M >= 0,
P >= 0.

2. Compound according to claim 1, **characterized in that** W is a radical derived from 2,2,4-trimethyl-hexamethylene diisocyanate and/or 2,4,4-trimethyl-hexamethylene diisocyanate.

3. Compound according to one of the claims 1 or 2, **characterized in that** every X is a radical derived from a compound from the group made up of polyethylene glycol with molecular weight 400 g/mol, polypropylene glycol with molecular weight 2000 g/mol, dimer diol and dimethylolpropionic acid, irrespective of the other X.

4. Compound according to any one of the claims 1 to 3, **characterized in that** W - (X - W)ₙ-X-W has a molecular weight between 750-1.000 g/mol.

5. Compound according to any one of the claims 1 to 3, **characterized in that** W - (X - W)ₙ-X-W has a molecular weight between 6.000-11.000 g/mol.

6. Compound according to any one of the claims 1 to 5, **characterized in that** W - (X - W)ₙ-X-W has a NCO:OH ratio between 1.1 and 1.3.

7. Compound according to any one of the claims 1 to 5, **characterized in that** W - (X - W)ₙ-X-W has a NCO:OH ratio between 1.8 and 2.1.

8. Compound according to any one of the claims 1 to 7, **characterized in that** A is a radical derived from a compound from the group made up of ethylenediamine, N-(2-aminoethyl)-3-aminopropyltrimethoxysilane, lysine, ethyldiamine propyl sulfonate and hexamethylenediamine.

9. Compound according to claim 8, **characterized in that** A is a radical derived from ethylenediamine or N-(2-aminoethyl)-3-aminopropyltrimethoxysilane.

10. Compound according to any one of the claims 1 to 9, **characterized in that** C or C' is a radical derived from N,N-dimethylethanolamine.

11. Compound according to any one of the claims 1 to 10, **characterized in that** C or C' is a radical derived from CH₃-CH₂-CH₂-CH₂-NH-CH₂-CH₂-CH₂-Si(OCH₃)₃.

12. Compound according to any one of the claims 1 to 11, **characterized in that** C or C' is a radical derived from N-(2-aminoethyl)-3-aminopropyltrimethoxysilane.

13. Compound according to any one of the claims 1 to 12, **characterized in that** C or C' is a radical derived from bis(trimethoxysilylpropyl)amine.

14. Compound according to any one of the claims 1 to 13, **characterized in that** C or C' is a radical derived from an isocyanate blocking agent.

15. Compound according to any one of the claims 1 to 14, **characterized in that** said isocyanate blocking agent is a compound from the group made up of pyrazole, 3,5-dimethylpyrazole, ketoximes, aliphatic esters, amides, imides and amines.

16. Compound according to any one of the claims 1 to 15, **characterized in that** said isocyanate blocking agent is 3,5-dimethylpyrazole.

17. Compound according to claim 1, **characterized in that**
W is a radical derived from isoforon diisocyanate,
every X is a radical derived from a compound from the group made up of polypropylene glycol with molecular weight 2.000 g/mol, dimer diol and dimethylolpropionic acid, irrespective of the other X,
C and C' are a radical derived from CH₃CH₂CH₂CH₂NHCH₂CH₂CH₂Si(OCH₃)₃,
M = 0,
P = 0,
and it has a molecular weight between 9.100 and 10.100 g/mol.

18. Compound according to claim 2, **characterized in that**
every X is a radical derived from a compound from the group made up of polypropylene glycol with molecular weight 2.000 g/mol, dimer diol and dimethylolpropionic acid, irrespective of the other X,
C and C' are a radical derived from CH₃CH₂CH₂CH₂NHCH₂CH₂CH₂Si(OCH₃)₃,
M = 0,
P = 0,
and it has a molecular weight between 8.700 and 9.800 g/mol.

19. Compound according to claim 2, **characterized in that**
every X is a radical derived from a compound from the group made up of polypropylene glycol with molecular weight 2.000 g/mol, dimer diol and dimethylolpropionic acid, irrespective of the other X
A is a radical derived from ethylenediamine,
C and C' are each, independently of the other, a radical derived from a compound from the group made up of diethanolamine and CH₃CH₂CH₂CH₂NHCH₂CH₂CH₂Si(OCH₃)₃,
M > 0,
P > 0,
and it has a molecular weight between 7.300 and 8.300 g/mol.

20. Compound according to claim 2, **characterized in that**
every X is a radical derived from a compound from the group made up of polypropylene glycol with molecular weight 2.000 g/mol, dimer diol and dimethylolpropionic acid, irrespective of the other X
C and C' are each, independently of the other, a radical derived from a compound from the group made up of diethanolamine and CH₃CH₂CH₂CH₂NHCH₂CH₂CH₂Si(OCH₃)₃,
M = 0,
P = 0,
and it has a molecular weight between 7.800 and 8.800 g/mol.

21. Compound according to claim 2, **characterized in that**
every X is a radical derived from a compound from the group made up of polypropylene glycol with molecular weight 2.000 g/mol, dimer diol and dimethylolpropionic acid, irrespective of the other X
A is a radical derived from ethylenediamine,
C and C' are each, independently of the other, a radical derived from a compound from the group made up of diethanolamine and CH₃CH₂CH₂CH₂NHCH₂CH₂CH₂Si(OCH₃)₃,
M > 0,
P > 0,
and it has a molecular weight between 9.200 and 10.200 g/mol.

22. Compound according to claim 2, **characterized in that**
every X is a radical derived from a compound from the group made up of polypropylene glycol with molecular weight 2.000 g/mol, dimer diol and dimethylolpropionic acid, irrespective of the other X
A is a radical derived from ethylenediamine,
C and C' are a radical derived from N-(2-aminoethyl)-3-aminopropyltrimethoxysilane, M > 0,
P > 0,
and it has a molecular weight between 6.200 and 7.200 g/mol.

23. Compound according to claim 2, **characterized in that**
every X is a radical derived from a compound from the group made up of polypropylene glycol with molecular weight 2.000 g/mol, dimer diol and dimethylolpropionic acid, irrespective of the other X
A is a radical derived from ethylenediamine,
C and C' are a radical derived from CH₃CH₂CH₂CH₂NHCH₂CH₂CH₂Si(OCH₃)₃,
M > 0,
P > 0,
and it has a molecular weight between 9.800 and 10.800 g/mol.

24. Compound according to claim 2, **characterized in that**
every X is a radical derived from a compound from the group made up of polypropylene glycol with molecular weight 2.000 g/mol, dimer diol and dimethylolpropionic acid, irrespective of the other X
C and C' are a radical derived from N-(2-aminoethyl)-3-aminopropyltrimethoxysilane, M = 0,
P = 0,
and it has a molecular weight between 6.300 and 7.400 g/mol.

25. Compound according to claim 2, **characterized in that**
every X is a radical derived from a compound from the group made up of polypropylene glycol with molecular weight 2.000 g/mol, dimer diol and dimethylolpropionic acid, irrespective of the other X
A is a radical derived from ethylenediamine,
C and C' are CH₃CH₂CH₂CH₂NHCH₂CH₂CH₂Si(OCH₃)₃,
M > 0,
P > 0,
and it has a molecular weight between 8.500 and 9.500 g/mol.

26. Compound according to claim 2, **characterized in that**
X is a radical derived from polyethylene glycol with molecular weight 400 g/mol,
C and C' are each, independently of the other, a radical derived from a compound from the group made up of CH₃CH₂CH₂CH₂NHCH₂CH₂CH₂Si(OCH₃)₃, 2-ethyllhexanol and glycine,
M = 0,
P = 0,
with molecular weight between 740 and 880 g/mol.

27. Compound according to claim 2, **characterized in that**
every X is a radical derived from a compound from the group made up of polyethylene glycol with molecular weight 400 g/mol, and dimer diol,
C and C' are each, independently of the other, a radical derived from a compound from the group made up of CH₃CH₂CH₂CH₂NHCH₂CH₂CH₂Si(OCH₃)₃, 2-ethyllhexanol and glycine,
M = 0,
P = 0,
with molecular weight between 780 and 880 g/mol.

28. Compound according to claim 2, **characterized in that**
every X is a radical derived from a compound from the group made up of polyethylene glycol with molecular weight 400 g/mol, and dimer diol,
C and C' are each one, independently of the other, a radical derived from a compound from the group made up of CH₃CH₂CH₂CH₂NHCH₂CH₂CH₂Si(OCH₃)₃, 2-ethylhexanol and N,N-dimethylethanolamine,
M = 0,
P = 0,
with molecular weight between 780 and 880 g/mol.

29. Compound according to claim 2, **characterized in that**
every X is a radical derived from a compound from the group made up of polyethylene glycol with molecular weight 400 g/mol, and dimer diol,
C and C' are each one, independently of the other, a radical derived from a compound from the group made up of bis(trimethoxysilylpropyl)amine, 2-ethylhexanol and N,N-dimethylethanolamine,
M = 0,
P = 0,
with molecular weight between 790 and 890 g/mol.

30. Compound according to claim 2, **characterized in that**
X is a radical derived from polyethylene glycol with molecular weight 400 g/mol,
C and C' are each one, independently of the other, a radical derived from a compound from the group made up of 3,5 dimethylpyrazole, CH₃CH₂CH₂CH₂NHCH₂CH₂CH₂Si(OCH₃)₃ and DMEA,
M = 0,
P = 0,
with molecular weight between 750 and 850 g/mol.

31. Composition for manufacturing a watermark in a laminar textile material comprising an emulsion of a compound according to any one of the claims 1 to 30 in water.

32. Laminar textile material which is made with a transparent textile material **characterized in that** it comprises an area impregnated with a compound according to any one of the claims 1 to 30, where said impregnated area is a watermark.

33. Procedure for manufacturing a watermark in a laminar textile material, which is made with a transparent textile material, **characterized in that** it comprises a printing stage wherein an area of said laminar textile material is impregnated with a compound according to any one of the claims 1 to 30, thus generating a watermark.

34. Procedure for manufacturing a watermark in a laminar textile material, which is made with a transparent textile material, **characterized in that** it comprises a printing stage wherein an area of said laminar textile material is impregnated with a composition according to claim 31, thus generating a watermark.

35. Use of a compound according to any one of the claims 1 to 30, for impregnating an area of a laminar textile material, where said laminar textile material is made with a transparent textile material, thus generating a watermark.

36. Use of a composition according to claim 31, for impregnating a laminar textile material, where said laminar textile material is made with a transparent textile material, thus generating a watermark.

37. Use according to one of the claims 35 or 36, **characterized in that** said laminar textile material is a label and said watermarks constitutes a safety element.
